# EUROPEAN PATENT APPLICATION

(11) **EP 4 360 468 A1**
(43) Date of publication of application: **01.05.2024**
(21) Application number: 22203917.4
(22) Date of filing: 26.10.2022
(51) Int. Cl.: A23L 2/395, A23G 1/00, A23G 1/04, A23G 1/56

(54) **A METHOD TO PRODUCE CACAO GRANULATE**

(71) Applicant: Depoorter, Frederik Jozef, 9990 Maldegem (BE); TWOBROTHERS BV, 9990 Maldegem (BE)
(72) Inventor: Depoorter, Frederik Jozef, 9990 Maldegem (BE)
(74) Representative: IP HILLS NV

(57) **Abstract**

A method to produce a cacao granulate is provided. The method comprises the steps of
- providing roasted cacao beans;
- optionally removing the husk from the roasted cacao beans thereby providing cacao nibs;
- comminuting the roasted cacao beans or the cacao nibs providing an intermediate comminute and providing a cacao granulate having a granule size distribution with a 90% fraction diameter (D90) smaller or equal to 2000µm.

## Description

### Field of the Invention

The present invention generally relates to a method to produce a cacao granulate, the cacao granulate so obtained, and the use of these cacao granulates to provide a cacao bean brew and/or extraction, such as in particularly hot brew techniques.

### Background of the Invention

Human beings have always been keen on drinking pleasant tasting liquids. Several plant roots, leaves, fruits, beans and alike have been and are used to brew extracts providing such pleasant tasting liquids.

Also cacao beans are known as a source of extracts, suitable to provide liquid brews. Hot chocolate brew is one of the most known liquid brews based upon cacao beans. Cocoa powder, made from pressed cacao cake, is used to make hot chocolate brew. This cacao cake is typically obtained from extraction of cacao butter from grinded cacao nibs

Other cacao bean based brews are given in JP6262387, where cacao nibs are cryogenically milled and used to make cacao bean based brews. JP6262387 indicates that the taste of aqueous cold brew liquids is quite satisfying, which is less the case for aqueous hot brew liquids. In EP1537790A1, cacao bean nibs are crushed and extracted, and providing a smooth texture without graininess. JP4368727B2 and JP2005261391A disclose adding fruit juice in a cacao nib alkali treatment step or a roasting step in order to cocoa beverage having a good flavor with reduced off-flavor and unpleasant taste.

### Summary of the Invention

Hence there is a need to provide aqueous cacao liquids having an acceptable, even improved, and reproducible taste and preferably allowing the broadest range of known hot/cold brew techniques to be used, and resulting in optimum drinkability and composition, both from a technical and a sensorial quality perspective. There is a need to provide aqueous cacao liquids having a high palatability and reproducible pure chocolate taste. There Is as well a need to provide and brew aqueous cacao liquids which reflect to a high degree the particularities of the cacao beans used, their origin, the way they were fermented or roasted, and many other aspects of the process the cacao beans were subjected to. There is as well the need to provide and brew aqueous cacao liquids which are easily brewed, either hot or cold, there is as well the need to provide and brew aqueous cacao liquids which may be drunken 'black' (as a tea or coffee-like beverage) without the need for a sweetener or creamer, or which are combined with a creamer or diary product to create a white coffee or hot chocolate experience.

According to a first aspect of the invention, a method to produce a cacao granulate is provided. The method comprises the steps of
- providing roasted cacao beans;
- optionally removing the husk from the roasted cacao beans thereby providing cacao nibs;
- comminuting the roasted cacao beans or the cacao nibs providing an intermediate comminute and providing a cacao granulate having a granule size distribution with a 90% fraction diameter (D90) smaller or equal to 2000µm.

The mass-median-diameter (or MMD or D50) is the diameter for which 50% of the mass of the fraction has a particle size above D50, and 50% of the mass of the fraction has a particle size less than D50. With 10% fraction diameter or D10 (or Dv(10)) is meant the diameter for which 10% of the mass of the fraction has a particle size less than this D10. With 90% fraction diameter or D90 (or Dv(90)) is the diameter for which 90% of the mass of the fraction has a particle size less than this D90.

The term diameter refers to the diameter of a sphere, having the same mass as the particle.

More preferably, the 90% fraction diameter (D90) is smaller or equal to 1750µm, preferably smaller or equal to 1500µm and most preferably smaller or equal to 1300µm.

According to some embodiments, the granule size distribution may have a 10% fraction diameter (D10) more or equal to 0.2 times D90, most preferably even more or equal to 0.25 times D90.

According to some embodiments the difference between D90 and D10, this is D90-D10, may be less than or equal to 1200µm, even more preferably less than or equal to 900µm.

Possibly the granule size distribution may have a 50% fraction diameter (D50), the span S, defined as (D90-D10)/D50 being less than or equal to 2.5, preferably less than or equal to 1.5, more preferably less than or equal to 1.

According to some embodiments, the step of providing a cacao granulate may comprise separating said intermediate comminute in at least two fractions, at least one of said two fractions being said cacao granulate having granule size distribution with a 90% fraction diameter (D90) smaller or equal to 2000µm, optionally smaller or equal to 1750µm, even smaller or equal to 1500µm, such as smaller or equal to 1300µm. Possibly, the comminute may be separated in at least N fractions, N being larger than 1, wherein at least one, some or all of the N fractions provides a cacao granulate having a granule size distribution with a 90% fraction diameter (D90) smaller or equal to 2000µm, optionally smaller or equal to 1500µm, such as smaller or equal to 1300µm.

According to some embodiments the at least one, some or all of the N fractions providing a cacao granulate having a granule size distribution with a 90% fraction diameter (D90) smaller or equal to 2000µm, may have a 10% fraction diameter (D10) more or equal to 0.1 times D90 of this cacao granulate, even more than or equal to 0.2 times D90 of this cacao granulate or even more than or equal to 2.5 times the D90 of this cacao granulate.

These at least one, some or all of the N fractions providing a cacao granulate having a granule size distribution with a 90% fraction diameter (D90) smaller or equal to 2000µm, may have a D90-D10 being less than or equal to 1750µm, even less than or equal to 1200µm, such as less than or equal to 900µm.These at least one, some or all of the N fractions providing a cacao granulate having a granule size distribution with a 90% fraction diameter (D90) smaller or equal to 2000µm may have a span S ((D90-D10)/D50) being less than or equal to 2.5, less than or equal to 1.5, even less than or equal to 1.

The intermediate comminute may be separated in fractions by sieving or any other way to select and single out a part of the granulates, singled out based on diameter.

According to a second, independent aspect of the invention a method to produce a cacao granulate is provided. The method comprises the steps of
- providing roasted cacao beans;
- optionally removing the husk from the roasted cacao beans thereby providing cacao nibs;
- comminuting the roasted cacao beans or the cacao nibs providing an intermediate comminute;
- separating said intermediate comminute in at least two fractions, at least one of said two fractions being a cacao granulate having granule size distribution having a mass median diameter (D50), a 10% fraction diameter (D10) and a 90% fraction diameter (D90), such that the span ((D90-D10)/D50) is less than or equal to 2.5, more preferred less than or equal to 2.0, or even less than or equal to 1.5.

The span may be more than 0, and less than or equal to 2.5, e.g. a span of less than or equal to 1.5, even less than or equal to 1.4, such as less than or equal to 1 or less than or equal to 0.75 may be provided. The span may be in the range of 0.25 to 1.4, such as in the range of 0.325 to 0.75. A more uniform granularity and size consistency has a large influence on the palatability and technical quality of the extract or brew made using the fraction.

According to some embodiments, the mass median diameter (D50) may be in the range of 0µm to 2000µm, preferably within the range of 300µm to 1500µm.
The range of 0µm to 2000µm is excluded 0µm.

Preferably the mass median diameter (D50) is in the range of 350 µm to 1250µm. Possibly the mass median diameter (D50) is in the range of 375µm to 1075 µm, such as about 500 µm, about 645µm or about 1050 µm. Possibly the mass median diameter (D50) is less or equal to 1500µm, such as less than 1500µm, more preferred less than or equal to 1100µm.

At least one fraction may be provided having a D50 in the range of 600µm to 775µm, a D10 in the range of 500µm to 650µm and a D90 in the range of 850µm to 950µm. The span is preferably in the range of 0.2 to 0.7. As an example one fraction is provided having a D50 of 645µm, a D10 of 500µm and a D90 of 900µm, the span being 0.62.

At least one fraction may be provided having a D50 in the range of 375µm to 550µm, a D10 in the range of 250µm to 400µm and a D90 in the range of 500µm to 700µm. The span is preferably in the range of 0.3 to 0.9. As an example one fraction is provided having a D50 of 500µm, a D10 of 350µm and a D90 of 700µm, the span being 0.7.

At least one fraction may be provided having a D50 in the range of 900µm to 1150µm, a D10 in the range of 700µm to 950µm and a D90 in the range of 1150µm to 1300µm. The span is preferably in the range of 0.2 to 0.5. As an example one fraction is provided having a D50 of 1050µm, a D10 of 900µm and a D90 of 1300µm, the span being 0.38.

According to some embodiments, the first and a further second fraction of the at least two fractions each have a span of less than or equal to 2.5, e.g. a span of less than or equal to 1.5. According to some embodiments, the first and a second, e.g. this second fraction of the at least two fractions each have a mass median diameter (D50) in the range of 0µm to 2000µm (0µm excluded), preferably within the range of 300µm to 1500µm.

According to some embodiments, the comminute may be separated in at least N fractions, N being larger than 1, wherein each of the N fractions have a span of less than or equal to 2.5, e.g. a span of less than or equal to 1.5.

According to some embodiments, the comminute may be separated in at least N fractions, N being larger than 1, wherein each of the N fractions have a mass median diameter (D50) of more than 0µm and less than or equal to 2000µm,hence in the range of 0µm to 2000µm, being 0µm excluded, preferably within the range of 300µm to 1500µm. It was confirmed, as indicated in JP6262387, that the comminute of roasted cacao beans as obtained immediately after comminuting, e.g. by milling or grinding, is not adapted to brew a tasty cacao brew using hot brewing and/or extraction techniques. Some techniques seemed very difficult, sometimes not even being feasible, to perform. For still other techniques, a sensorial quality beverage is difficult if not impossible to be obtained.

However, surprisingly, when only a specific fraction of the comminute, with a fine particle dimension distribution, as is the case for granulates provided by means of a method according to the first or second aspect of the invention, is used to brew a cacao bean brewage, an even extraction with a far more balanced and pleasant taste can be obtained, and this for hot brewed brewages. Depending on the technique of making the brewage a fraction with a given size distribution may be chosen. Extracting the flavorous components from the particles of the fraction with preferably hot water. This finding provides an optimum and reproducible taste, and a process easy to perform.

According to some embodiments of the first or second aspect, for each nth fraction, n being an integer more than or equal to 1 and less than N, the D50 of this nth fraction may be less than the D50 of the (n+1)th fraction.

As an example, N fractions may be provided having different D50, each fraction having a mass median diameter (D50) in the range of 0µm to 2000µm (0µm excluded), preferably within the range of 300µm to 1500µm.

According to some embodiments, for any mth fraction, m being an integer from 2 to N, the mth fraction may have its D10m in the range of 0.5*D90m-1 and 1.5*D90m-1, preferably in the range of 0.7*D90m-1 and 1.3*D90m-1, such as in the range of 0.75*D90m-1 and 1.25*D90m-1, preferably in the range of 0.8*D90m-1 and 1.2*D90m-1.

For any mth fraction, m being an integer from 2 to N, the mth fraction may have its D10m in the range of 0.9*D90m-1 and 1.1*D90m-1, preferably in the range of 0.9*D90m-1 and D90m-1.

According to some embodiments, for any pth fraction, p being an integer from 1 to N-1, the pth fraction may have its D90p in the range of 0.5*D10p+1 and 1.5*D10p+1, preferably in the range of 0.7*D10p+1 and 1.3*D10p+1, e.g. in the range of 0.75*D10p+1 and 1.25*D10p+1, preferably in the range of 0.8*D10p+1 and 1.2*D10p+1.

For any pth fraction, p being an integer from 1 to N-1, the pth fraction may have its D90p in the range of 0.9*D10p+1 and 1.1*D10p+1, preferably in the range of 0.9*D10p+1 and D10p+1.

Preferably N is less than or equal to 10, such as 2, 3, 4, 5, 6, 7, 8 or 9.

Possibly for each two fractions having consecutive values of D50, hence the D50 of the first fraction being less than the D50 of the second fraction, the D10 of the second fraction may be larger than, smaller than, or equal to the D90 diameter of the first fraction.

Preferably each mass median diameter (D50) of more than one, e.g. of all N fractions is in the range of 0µm to 2000µm (0µm excluded), preferably within the range of 300µm to 1500µm. Preferably more than one, e.g. of all the mass median diameters (D50) are in the range of 350 µm to 1250µm.

Possibly more than one, e.g. of all the mass median diameters (D50) are in the range of 375µm to 1075 µm.

Preferably the mass median diameter (D50) of more than one, e.g. of all N fractions is less or equal to 1000µm, such as less than 1000µm, more preferred less than or equal to 800µm.

Preferably the span of the at least one fraction, optionally of more than one of the more than one fractions, such as of all the N fractions, is more than 0, and less than or equal to 2.5, e.g. a span of less than or equal to 1.5, even less than or equal to 1.4, such as lass than or equal to 1 or less than or equal to 0.75 may be obtained. The span may be in the range of 0.25 to 1.4, such as in the range of 0.325 to 0.75.The closer the span is to 0 , the more the granularity is uniform and the size consistency is better. Such more uniform granularity and size consistency has a large influence on the palatability of the extract or brew made using the fraction.

According to some embodiments, one fraction of the fractions into which the comminute is separated, may be a fine waste fraction. This fine waste fraction typically has a mass median diameter (D50) less than 175 µm, and a D90 of 350 µm. This fraction may be used for other purposes, like chocolate production or alike. This fraction may however also be used for e.g. hot or cold chocolate brews, and in some cases hence may be a chocolate granulate according to the invention.

According to some embodiments, one fraction of the fractions into which the comminute is separated, may be a coarse fraction, typically having a D10 of more than 1250µm, even more than 1500µm, or more than 2000µm. This fraction may be used for other purposes, like chocolate production or alike, or could be reground to achieve smaller granulates. Hence according to some embodiments, the method to produce a cacao granulate may be free of providing a coarse fraction, typically having a D10 of more than 1250µm, even more than 1500µm, or more than 2000µm.

According to some embodiments of the first or second aspect of the invention, the husks may be removed from the roasted cacao beans prior to comminuting. In other words, only the nibs of the roasted cacao beans are preferably comminuted.

According to some embodiments, the nibs from the roasted cacao beans may be comminuted in its entirety. This has the effect that the content of cacao butter present in the nibs remain substantially unchanged in the intermediate comminute, and hence in the fractions provided. The method according to the invention is free of an extraction step, extracting cacao butter from the nibs or the comminute.

As such one or more fractions are provided comprising a cacao butter content in the range of 24% to 70%, such as in the range of 45% to 65%.

In the context of this invention, "nibs from the roasted cacao beans being comminuted in its entirety" means that the entire nib, retaining all the cacao butter present in the cacao nib after a roasting process, is comminuted.

According to some embodiments of the first or second aspect of the invention, the roasted cacao beans or cacao nibs may be comminuted in frozen state. In view of the present invention, comminuted in a frozen state is to be understood that the roasted cacao beans or cacao nibs are brought to a temperature under the freezing point. Hence the roasted cacao beans or cacao nibs may be comminuted while having a temperature of less than or equal to - 10°C, preferably less than or equal to - 20°C.

The roasted cacao beans or cacao nibs can be frozen by various applications known to the professional. Attaining the frozen state via temperature-controlled rooms, freezers, etc. by allowing the expansion of compressed gasses, like N2 or CO2, or liquefied gasses, like liquid N2 or liquid CO2, using dry ice in the process, etc. may be used.

According to some embodiments, the roasted cacao beans or cacao nibs may be comminuted under cryogenic circumstances. In view of the present invention, comminuted under cryogenic circumstances is to be understood that the ambient of the roasted cacao beans or cacao nibs during comminuting is kept at a temperature well under the freezing point.

Such temperatures and/or cryogenic circumstances may be created by operating the comminuting machinery in an air-conditioned room, conditioned at sufficiently low temperatures, e.g. by cooling the comminuting machinery and/or the machinery room prior to operation. this may be obtained e.g. by allowing the expansion of compressed gasses, like N2 or CO2, or liquefied gasses, like liquid N2 or liquid CO2, or dry ice to expand or evaporate in or adjacent the comminuting machinery, during the comminuting process.

Also an optimum workflow from the freezing stage to the comminuting stage can be of great value to maintain the desired circumstances.

Various comminuting techniques may be used to comminute the roasted cacao beans. The method for producing a cocoa crushed product of the present invention is characterized by crushing cocoa beans or nibs without squeezing. As an example, such comminuting techniques may be conventional methods, and apparatuses such as a coffee mill, a disc mill, a stone mill, a ball mill, a pin mill, an impact mill, and a hammer mill can be used. Moreover, it is preferable to crush cocoa beans or nibs by cutting or shearing. By cutting or shearing, the cocoa crushed material can be prevented from becoming a paste.

These various comminuting techniques, preferably used in cryogenic circumstances, and/or applied to frozen cacao beans of nibs, may allow to grind the nibs or beans continuously with a reduced heat built up.

Appropriate parameters for grinding may be selected to ensure that the resulting granule diameters become sufficiently small and quite uniform, to allow the separation of the intermediate comminute in two or more fractions according to the invention, or even may avoid the need to separate the comminute, and provide as such a fraction being a cacao granulate according to the invention.

According to some embodiments of the first or second aspect of the invention, various separation techniques may be used to separate the comminute in appropriate fractions, which may also be referred to as classification. The particles or granules are separated based upon their size. It can be executed by e.g. sifters, the use of cyclones or by gravity. Preferably the separation is performed by sifting, sieving the intermediate comminute with several sieves, the particles or granules being retained by one of the sieves may provide a fraction according to the invention. Flushing the comminute with e.g. air or any other suitable medium, winnowing or sifting may be used to separate particles or granules. Fine, or too fine particles may be removed by using electrostatic attraction of the small particles. Hence according to some embodiments, the intermediate comminute may be separated in fractions by sieving, flushing, winnowing, sifting and/or extracting of the small particles by using electrostatic attraction.

According to some embodiments, the intermediate comminute may be separated in fractions by sieving. The sieving operation may take several consecutive steps. In a first step, the too fine particles or granules are removed by using the finest sieve used in the sieving step. The removed fraction may be the fine waste fraction. The particles or granules remaining on the sieve are used in a next step. In this next, second step, the particles or granules being too coarse are sieved out. The removed fraction may be the coarse waste fraction. The particles or granules passing the sieve are used in one or more next steps. The first and second step may be applied in reverse order as well or in a single step sieving out the particles being both too fine and too coarse. In the one or more next steps, at least one fraction, and possibly more than one fraction, is sieved out, having a granule size distribution according to the invention. Alternatively, first the particles or granules being too coarse, the coarse waste fraction, are sieved out, after which in the one or more next steps, at least one fraction, and possibly more than one fraction, is sieved out, having a granule size distribution according to the invention. What remains after the last sieve are the too fine particles or granules which are removed, constituting the fine waste fraction.

As an example, N consecutive metal or polymer wire mesh sieves, N being 2 or more, with mesh sizes MS1 to MSN may be used, for which MS1>...>MSN. By using these consecutive sieves, N+1 fractions may be obtained, the first, coarsest fraction having its D50 above MS1, the N+1th fraction having its D50 less than MSN , and for any mth fraction, m being an integer from 2 to N, the mth fraction having its D50 between MSm-1 and MSm.

For any mth fraction, m being an integer from 2 to N, the mth fraction having its D90 in the range of 0.9*MSm-1 and 1.1*MSm-1, preferably in the range of 0.9*MSm-1 and MSm-1. For any mth fraction, m being an integer from 2 to N, the mth fraction having its D10 in the range of 0.9*MSm and 1.1*MSm, preferably in the range of 0.9*MSm and MSm. The mth fraction, m being an integer from 2 to N, may be a fraction having its granule size distribution according to the present invention. By selecting the mesh sizes of the consecutive sieves, for one or more, or even all of the fractions being different from the first, coarsest, and last, finest fraction, a fraction with a granule size distribution having a span of more than 0, and less than or equal to 2.5, e.g. a span of less than or equal to 1.5, even less than or equal to 1.4, such as lass than or equal to 1 or less than or equal to 0.75 may be obtained, e.g. a span in the range of 0.25 to 1.4, such as a span of 0.325 to 0.75.

As an example, four consecutive metal or polymer wire mesh sieves with mesh sizes 1250µm, 900µm, 600µm and 350µm may be used. As such 5 fractions may be obtained. A first the coarsest fraction is obtained having a D50 and possibly its D10 above 1250 µm. A second fraction is obtained having its D50 between 1250 µm and 900 µm, a third fraction is obtained having its D50 between 900 µm and 600 µm, a fourth fraction having its D50 is obtained between 600 µm and 350 µm, and a fifth fraction having its D50 and possibly its D90 less than 350µm.

Possibly the volume of particles or granules retained after removal of the coarse and fine waste fraction, are separated in at least three fractions according to the invention, being a fraction having its D10, D50 and D90 in the range of 300µm to 750µm, e.g. a D10 of about 350µm, D50 of about 475µm and a D90 of about 600µm, a fraction having its D10, D50 and D90 in the range of 550µm to 1000µm, e.g. a D10 of about 600µm, D50 of about 725µm and a D90 of about 900µm, a fraction having its D10, D50 and D90 in the range of 850µm to 1300µm, e.g. a D10 of about 900µm, D50 of about 1050µm and a D90 of about 1250µm. these three fractions, which may be referred to as fine, medium and coarse fraction, each may be used for making a brew or extraction by one or more dedicated brew or extraction techniques.

According to some embodiments, the roasted cacao beans or cacao nibs may be comminuted by grinding. As an example, a blade grinder or by mill stone grinding. According to some embodiments, the roasted cacao beans or cacao nibs may be comminuted using a chopper mill.

The cacao beans can be roasted in any of the roast profiles known in the art, such as a lighter roast profile, or a darker roast profile. During roasting, cacao beans may get exposed to temperatures ranging from 120°C to 150°C and more, for anything from 30min to an hour and more. Possibly coffee roast profiles are using higher temperatures and shorter roasting times may be used.

As producing a cacao granulate for optimum drinkability, both from a technical as sensorial perspective, is one of the objects of the present invention, selecting a cacao bean with a quality composition, based e.g. on tree genetics, growth conditions, growth location and a well performed process of fermentation, as well as subjecting the cacao beans to a matching roasting profile, A somewhat medium roasting profile might improve the general palatability of the extract or brew. Whereas a, preferred, light roasting profile, will highlight the particularities in the aroma, flavor and taste of the cacao beans used, for a more specific palatability of the extract or brew.

Comminuted the roasted cacao beans or cacao nibs and separate the granulates into accurate and narrow fractions or classifications according to the invention, will have an immense impact on the palatability of the extract or brew. Subjecting the selected cacao beans to a matching roasting profile, comminute the roasted cacao beans or cacao nibs and separate the granulates into accurate and narrow fractions or classifications according to the invention, possibly and even preferably in direct relation to the desired extraction and/or brewing method, the extract or brew will celebrate the single origin attributes of the cacao bean, the particularities in its aroma, flavor and taste, elevating the experience in terms of palatability. The method may provide a cacao granulate which may be used to provide aqueous cacao liquids having a high palatability and reproducible pure chocolate taste. These cacao granulates may be used to provide and brew aqueous cacao liquids which reflect to a high degree the particularities of the cacao beans used, their origin, the way they were fermented or roasted, and many other aspects of the process the cacao beans were subjected to. These cacao granulates may be used to provide and brew aqueous cacao liquids which are easily brewed, either hot or cold, there is as well the need to provide and brew aqueous cacao liquids which may be drunken 'black' (as a tea or coffee-like beverage) without the need for a sweetener or creamer, or which are combined with a creamer or diary product to create a white coffee or hot chocolate experience.

According to a third aspect of the invention, a cacao granulate is provided. The cacao granulate comprising at least 24%w of cacao butter, said granulate having a granule size distribution with a 90% fraction diameter (D90) smaller or equal to 2000µm. The cacao granulate may be provided using a method according to the first aspect of the invention. According to a fourth aspect of the invention, a cacao granulate is provided, the cacao granulate comprising at least 24%w of cacao butter, said granulate having a granule size distribution with a mass median diameter (D50), a 10% fraction diameter (D10) and a 90% fraction diameter (D90), such that the span ((D90-D10)/D50) is less than or equal to 2.5, e.g. a span of less than or equal to 1.5. A cacao granulate according to the fourth aspect of the invention may be provided by a method according to the second aspect of the invention.

More preferred, the cacao granulate according to the third or fourth aspect of the invention comprises a cacao butter content in the range of 24% to 70%, such as in the range of 45% to 65%.

Cacao granulate according to the third or fourth aspect of the invention may have a D90 of less than or equal to 300, possibly even less than 150µm. Optionally this cacao granulate may have a D10 of more than or equal to 30µm. Optionally this cacao granulate may have its D10 being more than or equal to 0.1*D90, even more than or equal to 0.25*D90. Optionally this cacao granulate may have its D90-D10 being less than or equal to 300µm, such as less than or equal to 270µm, e.g. less than or equal to 120µm, such as less than or equal to 112.5µm. These cacao granulates may preferably be used to make hot or cold chocolate drinks, based upon water or milk or any other similar liquid.

Cacao granulate according to the third or fourth aspect of the invention may have a D90 of less than or equal to 500, possibly even less than 400µm. Optionally this cacao granulate may have a D10 of more than or equal to 100µm, such as more than or equal to 150µm. Optionally this cacao granulate may have its D10 being more than or equal to 0.2*D90, even more than or equal to 0.375*D90. Optionally this cacao granulate may have its D90-D10 being less than or equal to 400µm, such as less than or equal to 250µm. These cacao granulates may preferably be used to make extracts by means of a Turkish coffee extraction.

Cacao granulate according to the third or fourth aspect of the invention may have a D90 of less than or equal to 800, possibly even less than 700µm. Optionally this cacao granulate may have a D10 of more than or equal to 200µm, such as more than or equal to 350µm. Optionally this cacao granulate may have its D10 being more than or equal to 0.25*D90, even more than or equal to 0.5*D90. Optionally this cacao granulate may have its D90-D10 being less than or equal to 600µm,such as less than or equal to 350µm. These cacao granulates may preferably be used to make extracts by means of a mokka pot or espresso extraction machines.
- Cacao granulate according to the third or fourth aspect of the invention may have a D90 of less than or equal to 1000, possibly even less than 900µm. Optionally this cacao granulate may have a D10 of more than or equal to 400µm, such as more than or equal to 500µm. Optionally this cacao granulate may have its D10 being more than or equal to 0.4*D90, even more than or equal to 0.5*D90, such as more than or equal to 0.56*D90. Optionally this cacao granulate may have its D90-D10 being less than or equal to 600µm, such as less than or equal to 400µm. These cacao granulates may preferably be used to make extracts by means of an aeropress extraction, or for cold brew extraction.
- Cacao granulate according to the third or fourth aspect of the invention may have a D90 of less than or equal to 1350, possibly even less than 1100µm. Optionally this cacao granulate may have a D10 of more than or equal to 350µm, such as more than or equal to 400µm. Optionally this cacao granulate may have its D10 being more than or equal to 0.25*D90, even more than or equal to 0.35*D90, such as more than or equal to 0.26*D90 or more than or equal to 0.36*D90. Optionally this cacao granulate may have its D90-D10 being less than or equal to 1000µm, such as less than or equal to 700µm. Particular examples of such granulates have a D90 of less than or equal to 1100, a D10 of more than or equal to 850µm, its D10 being more than or equal to 0.77*D90, the D90-D10 being less than or equal to 250µm. Other particular examples of such granulates have a D90 of less than or equal to 850,µm a D10 of more than or equal to 425µm, its D10 being more than or equal to 0.5*D90, the D90-D10 being less than or equal to 425µm. Still other particular examples of such granulates have a D90 of less than or equal to 1250,µm a D10 of more than or equal to 700µm, its D10 being more than or equal to 0.55*D90, the D90-D10 being less than or equal to 550µm. Further particular examples of such granulates have a D90 of less than or equal to 900µm a D10 of more than or equal to 400µm, its D10 being more than or equal to 0.44*D90, the D90-D10 being less than or equal to 500µm.These cacao granulates may preferably be used to make extracts by means of an pour over or filter drip extraction.

Cacao granulate according to the third or fourth aspect of the invention may have a D90 of less than or equal to 1500µm, possibly even less than 1300µm. Optionally this cacao granulate may have a D10 of more than or equal to 600µm, such as more than or equal to 900µm. Optionally this cacao granulate may have its D10 being more than or equal to 0.4*D90, even more than or equal to 0.5*D90, such as more than or equal to 0.65*D90. Optionally this cacao granulate may have its D90-D10 being less than or equal to 900µm, such as less than or equal to 400µm. These cacao granulates may preferably be used to make extracts by means of a French press extraction, or for cold brew extraction.

According to some embodiments, the cacao granulate may have a mass median diameter (D50) in the range of 250µm to 350µm, D10 in the range of 100µm to 150µm and D90 in the ranged of 400µm to 520µm. According to some embodiments, the cacao granulate may have a mass median diameter (D50) in the range of 375 µm to 550µm, D10 in the range of 200µm to 350µm and D90 in the ranged of 600µm to 850µm. According to some embodiments, the cacao granulate may have a mass median diameter (D50) in the range of 600µm to 775µm, D10 in the range of 350µm to 550µm and D90 in the ranged of 800µm to 1150µm. According to some embodiments, the cacao granulate may have a mass median diameter (D50) in the range of 850µm to 1050µm, D10 in the range of 600µm to 750µm and D90 in the ranged of 1150µm to 1300µm. According to some embodiments, the cacao granulate may have a mass median diameter (D50) in the range of 950µm to 1150µm, D10 in the range of 600µm to 900µm and D90 in the ranged of 1175µm to 1500µm. According to some embodiments, the cacao granulate may have a mass median diameter (D50) in the range of 1350µm to 1550µm, D10 in the range of 1100µm to 1300µm and D90 in the ranged of 1650µm to 1800µm.

The granulate having a mass median diameter (D50) in the range of 250µm to 350µm, D10 in the range of 100µm to 150µm and D90 in the ranged of 400µm to 520µm was found to be useful to make a cacao brew using the method of brewing Turkish coffee. A preferred granulate has a D50 of about 250µm, D10 of about 150µm, D90 of about 400µm and a span of about 1.

The granulate having a mass median diameter (D50) in the range of 375µm to 550µm, D10 in the range of 200µm to 350µm and D90 in the ranged of 600µm to 850µm was found to be useful to brew a cacao brew using an espresso brewing technique, using capsules or using a percolator. A preferred granulate has a D50 of about 500µm, D10 of about 350µm, D90 of about 700µm and a span of about 0.7.

The granulate having a mass median diameter (D50) in the range of 600µm to 775µm, D10 in the range of 350µm to 550µm and D90 in the ranged of 800µm to 1150µm was found to be very useful for use in aeropress brewing machines, for filter drip applications, and syphon brewing techniques. It was also found to be suitable for use in agitated cold brewing processes. A preferred granulate has a D50 of about 645µm, D10 of about 500µm, D90 of about 900µm and a span of about 0.62.

Another granulate having a mass median diameter (D50) in the range of 950µm to 1150µm, D10 in the range of 600µm to 900µm and D90 in the ranged of 1175µm to 1500µm was found to be suitable for use in pour over where the cacao granulate is retained in an open filter bag, the hot liquid, preferably water, being provided through the opening of the filter. This granulate is also found to be suitable for filter drip brewing processes, for use in French press apparatuses. This granulate is also found to be suitable for tea brewing techniques, where the cacao granulate is retained in a closed filter bag of granulate holder, the hot liquid, preferably water, being provided through the pores of the filter or granulate holder. A preferred granulate has a D50 of about 1000µm, D10 of about 900µm, D90 of about 1300µm and a span of about 0.4.

A granulate having a mass median diameter (D50) in the range of 1350µm to 1550µm, D10 in the range of 1100µm to 1300µm and D90 in the ranged of 1650µm to 1800µm, such as a granulate having a D50 of about 1450µm, D10 of about 1250µm, D90 of about 1750µm and a span of about 0.333 was found to be suitable in immersion cold brewing processes.

According to a fifth aspect of the invention, the cacao granulate according to the third or fourth aspect of the invention is used for brewing or extracting a cacao bean based brew or extract using hot water or steam. The cacao granulate according to the second aspect of the invention may be used for brewing a cacao bean based brew using cold water extraction.

According to a further sixth aspect of the invention, a cacao granulate obtained by a method according to the first or second aspect of the invention, may be used for brewing a cacao bean based brew using hot water or steam. A cacao granulate obtained by a method according to the first or second aspect of the invention may be used for brewing a cacao bean based brew using cold water extraction.

Though other hot liquids, such as hot milk or hot plant based alternatives, may be used to extract the flavors from the particles of the cacao granulate, hot water or steam is most preferred. Any type of extraction liquid may be used, such as water, milk, animal milk or vegetable milk such as bovine milk, horse milk, goat milk, soy milk, alcohol or liquids containing alcohol, fruit juices, and alike, both cooled, cold, at ambient temperature, or heated, like hot or at boiling temperature.

It was found that the provision of a certain cacao granulate with a certain fineness, reflected in the D50 and Span, in order to use a given brewing technique, is important to have on the one hand a technically suitable brewing operation, and on the other hand a well-balanced extraction of flavor from the particles. As an example, when a filter, like a paper filter, is used to retain the particles of the cacao granulate, while hot water is seeping thought the retained particles and the filter paper, the presence of too many too fine particles would result in clogging and too much of the cacao butter in the particles to be exposed, causing the water to be upheld above the filter paper and possible over-extraction of the brew. When water is continuously provided to the holder retaining the cacao granulate and filter, the water eventually will run over the holder, while no extract or brew is provided. When in this situation too coarse particles are used, an incomplete or extraction of flavors may lead to an unbalanced, less appreciated tasting brew.

This so called hot brew technique may be as an example any technique known from the coffee or tea industry.

According to a further, seventh aspect of the invention, a brewing process is provided, where the cacao granulate, such as a cacao granulate according to the second aspect of the invention, optionally obtained by a method according to the first aspect of the invention, is provided in a metal filter, like a metal sieve, e.g. a metal conical sieve; this metal filter is thereafter inserted in or put on a paper filter. Hot water is provided, like poured or dripped, on the cacao granulate. The water takes up flavourings and colourings while it seeps through the granulates, the metal filter and the paper filter into a recipient. Alternatively a paper filter is inserted in a metal filter. As a mere example a metal V60 filter is inserted in a V60 paper filter, which on its turn is inserted in a holder or so-called dripper. As a mere other example a paper V60 filter is inserted in a V60 metal filter, which on its turn is inserted in a holder. As a mere other example a metal AeroPress filter is placed on top of a paper filter and inserted into an AeroPress filter cap. Surprisingly it as found that the addition of a metal filter, preferably a metal filter in or on top of a paper filter, increases the quality of the cacao brew and or extract; both in a sensorial and technical way. The addition of the metal filter decreases the risk of the cacao granulates clogging the primary (often paper) filter therefore avoiding an impaired brew and/or over-extraction of the extract due to a too lengthy brew time. When the primary (often paper) filter would be exchanged for the metal filter (instead of the metal filter being used in addition) it might prove to be impossible to brew a clear cup of cacao extract as the mesh size of a metal filter is typically larger and cacao solids would be a significant part of the cacao extract or brew. Which might not be desirable to attain a higher palatability.

In the above mentioned brewing processes, a weight ratio of in the range of 1 to 12 up to 1 to 18 (and everything in between) of hot water over granulate was used. The hot water preferably has a temperature in the range of 82 to 98°C. Weight to water ratio's, water temperatures and extraction times can be altered according to the selected brewing technique, the desired level of extraction, the desired flavor profile, the integration of specific brew methodologies (like the use of bypass), the single origin attributes of the cacao beans, the specific roast profile (lighter vs darker roasts extract in a different way), and alike. According to the selected brew style, the cacao granulates may be agitated during the process to improve technical and sensorial quality of the extraction.

One or more features of one aspect of the invention may be combined with one or more features of another aspect of the invention.

In the scope of the present invention, and unless otherwise indicated, ranges are to be understood closed, i.e. including its end points.

### Brief description of the drawings

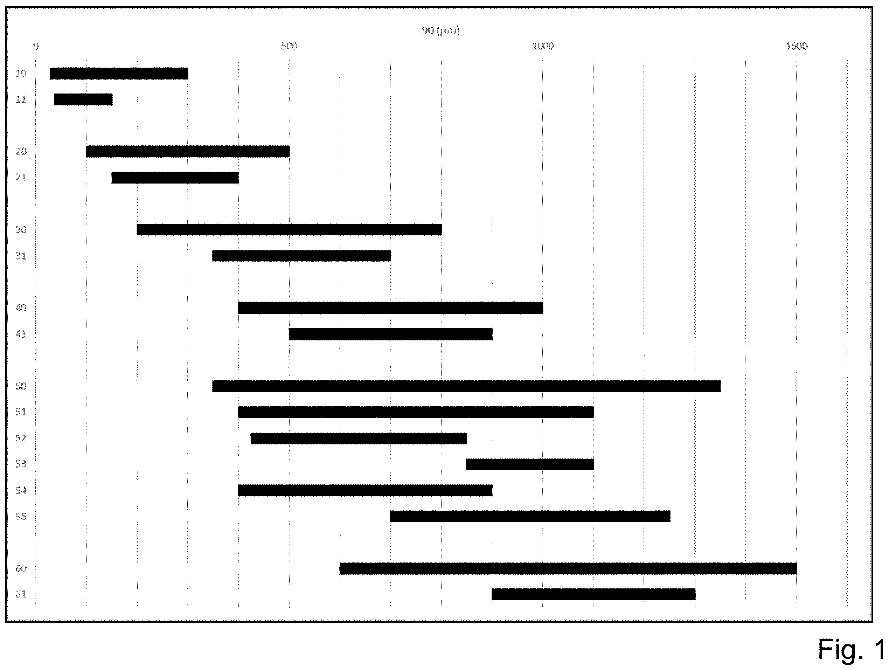

Figure 1 schematically shown the cacao granulate distribution parameters are of different cacao granulates for potentially suitable brewing processes.

### Detailed Description of Embodiment(s)

A first cacao granulate according to the invention is provided by an exemplary method according of the first aspect of the invention. In this method, first appropriate cacao beans are selected. As an example, a blend of two types of cacao beans , being a blend of Trinitario and Forestero, was chosen, grown in the south-west of India. The blend of beans was stepwise fermented during 5 days in Wild Jack wood barrels. The beans were thereafter sundried on flat surfaces, like tables, under open shelters.

The cacao beans were roasted using a light, medium or dark roasting profile, during which the cacao beans are subjected to a temperature of 120°C to 150°C during 30 to 60 minutes. After roasting during winnowing, the husks are removed from the cacao beans , and the bean is split in nibs. As such, in the nibs, a cacao butter content of 50% to 59% is obtained.

The nibs are frozen in a freezer, such that the core of the nibs is cooled to a temperature of less than -20°C, preferably to -30°C or even less than -30°C. as an alternative for a freezer, dry ice or liquid gasses, like CO2 may be used to bring the core temperature of the nibs to this frozen level.

The frozen nibs are subjected to an intermediate comminute by a comminuting step, where they are e.g. comminuted by a pin mill, or by a vertical chopper, or a comminutor where the nibs are comminuted through a series of rollers, the distances between the rollers of a pair of rollers being set and tuned stepless. The nibs are comminuted providing granules having a dimension of less than 3000µm, even less than 2250µm, such as less than 1250µm.

The intermediate comminute is separated into fractions by e.g. vertical circular sieve, having 3 sieving levels. The three sieves are in order from inflow to outflow, sieves with a mesh size 1250µm, 900µm and 500µm. The fraction, which is retained by the 1250µm mesh size sieve, is seen as coarse waste fraction. The fraction passing the 500µm mesh size sieve is seen as fine waste fraction.

The fraction retained by the 900µm mesh size sieve, but having passed the 1250µm mesh size sieve, has a D50 of 1050 and a D10 of 900, a D90 of 1200. Hence a span S of 0.286 is obtained. This fraction is a first cacao granulate according to the second aspect of the invention. The fraction retained by the 500µm mesh size sieve, but having passed the 900µm mesh size sieve, has a D50 of 650 and a D10 of 500, a D90 of 850. Hence a span S of 0.54 is obtained. This fraction is a second cacao granulate according to the second aspect of the invention.

This first cacao granulate according to the second aspect of the invention, a relatively medium to coarse fraction, may be used to brew a cacao bean brew using extraction with hot, e.g. boiling, water, and by means of e.g. a French press process, thereby providing a high, bold extraction of the flavors of the cacao granulate, whereby a relatively long extraction time is used. This second cacao granulate according to the second aspect of the invention, being a relatively fine or medium fraction, may be used to brew a cacao bean brew using e.g. a pour over or drip brewing process, thereby providing a mild, delicate extraction of the flavors of the cacao granulate, using a shorter extraction time.

Alternatively, in a further method according to the invention, the intermediate comminute is separated into fractions by e.g. vertical circular sieve, having 3 sieving levels. The three sieves are in order from inflow to outflow, sieves with a mesh size 1100µm, 700µm and 350µm. The fraction, which is retained by the 1100µm mesh size sieve, is seen as coarse waste fraction. The fraction passing the 350µm mesh size sieve is seen as fine waste fraction.

The fraction retained by the 700µm mesh size sieve, but having passed the 1100µm mesh size sieve, has a D50 of 875 and a D10 of 700, a D90 of 1050. Hence a span S of 0.4 is obtained. This fraction is a third cacao granulate according to the invention. The fraction retained by the 350µm mesh size sieve, but having passed the 700µm mesh size sieve, has a D50 of 500 and a D10 of 350, a D90 of 650. Hence a span S of 0.6 is obtained. This fraction is a fourth cacao granulate according to the invention.

This third cacao granulate according to the invention, a relatively medium fraction, may be used to brew a cacao bean brew using extraction with hot, e.g. boiling, water, and by means of e.g. a pour over or drip brewing process. The fourth cacao granulate according to the invention, a fine fraction, may be used to brew a cacao bean brew using e.g. a mokka pot or espresso process.

In a further alternative method according to the invention, the intermediate comminute is separated into fractions by e.g. vertical circular sieve, having 3 sieving levels. The three sieves are in order from inflow to outflow, sieves with a mesh size 900µm, 500µm and 150µm. The fraction, which is retained by the 900µm mesh size sieve, is seen as coarse waste fraction. The fraction passing the 150µm mesh size sieve is seen as fine waste fraction.

The fraction retained by the 500µm mesh size sieve, but having passed the 900µm mesh size sieve, i.e. a fifth cacao granulate according to the invention, may be used to provide a cacao brew using hot water and an aeropress process. The sixth cacao granulate according to the invention, i.e. the fraction is retained by the 150µm mesh size sieve, but having passed the 500µm mesh size sieve, may be used to provide a cacao brew using hot water and a Turkish coffee brewing process.

It is also possible to provide other fractions according to the invention, by using only 2 sieves, providing only one fraction according to the invention obtained as the fraction between the two sieves, or using 4 or more sieves, providing 3 or more fractions according to the invention, each one obtained between two consecutive sieves of the set of sieves.

As a mere example, a fractions according to the invention is used to make a pour over cacao bean brew. A cacao granulate with D10 of 400µm, a D50 of 600µm and a D90 of 900µm is selected. The cacao granulate is provided in a V60 pour over paper filter in an appropriate holder, also referred to as dripper, or in a V60 pour over metal filter in an appropriate holder. Even more preferred, cacao granulate is provided in a the V60 pour over metal filter placed in a V60 pour over paper filter, which on its turn is provided in an appropriate dripper. This dripper may be a ceramic, glass or plastic dripper, or may be provided from any other suitable material.

E.g. 18 gr of cacao granulate is used and 288ml water at a temperature in the range of 80°C to 100°C, like 90°C is used to brew the cacao brew. Hence a granulate/water ratio of 1:16 may be used. First, the granulate is contacted with a smaller amount of water to allowing to moisten the granulate. A granulate/water ratio of 1:2 may be used for this wetting. Alternatively the granulate/water ratio in the range of 1:1 to 1:5 may be used. The remainder of the hot water is poured in the filter in 2 to 5 steps, each time using an about equal amount of water. A cacao brew is obtained in about 3 to 5 minutes.

The result is a technically qualitative clear cup hot brew cocoa with a high palatability, the taste of dark chocolate and a pronounced character linked to the cocoa bean profile, such as the bean origin, fermentation, roast and alike. The use of a combination of a metal filter and a paper filter surprisingly provide a more evenly extracted, both technical and sensorial, cup of brew, in comparison to using only a paper filter or a metal filter.

Other brewing styles and cacao granulates according to the invention can be used to obtain other specific tasks, from the same or similar cocoa bean granulates and/or the same or similar cacao beans, depending on the extraction or brew process used. More or less body, more or less extraction, more or less acidity, more or less oils and/or fats, a clear versus cloudy brew may be obtained. Obviously, the cocoa bean profile can and/or should also have an influence on the choice of fractioning the intermediate comminute, the brewing style and parameters within the brewing method and alike.

Different cacao granulate distribution parameters are shown in figure 1, where suitable particle distribution ranges, delimited by particle diameters D10 and D90 as set out on axis (90), are set out for specific brewing processes.

Cacao granulates (10, 11) according to the invention may be used to provide hot or cold chocolate drinks. A cacao granulate (10) may have a D10 of equal or more than 30µm and a D90 of equal or less than 300µm. D10 is more than or equal to 0.1*D90. The span may be less than or equal to 1.75, whereas the D90-D10 is less than or equal to 270µm. As an example, such cacao granulate (11) may have a D10 of about 37.5µm, a D90 of about 150µm and a span of about 1, whereas the D90-D10 is less than or equal to 112.5µm, and D10 is more than or equal to 0.25*D90.

Cacao granulates (20, 21) according to the invention may be used in Turkish coffee brewing processes. A cacao granulate (20) may have a D10 of more than 100µm and a D90 of equal or less than 500µm, D10 is more than 0.2*D90. The span may be less than or equal to 2, whereas the D90-D10 is less than or equal to 400µm. As an example, such cacao granulate (21) may have a D10 of about 150µm, a D90 of about 400µm and a span of about 1, whereas the D90-D10 is about 250µm, D10 being about 0.375*D90.

Cacao granulates (30, 31) according to the invention may be used in espresso machine or mokka pot brewing processes. Such a cacao granulate (30) may have a D10 of equal or more than 200µm and a D90 of equal or less than 800µm. D10 is more than or equal to 0.25*D90. The span may be less than or equal to 1.65, whereas the D90-D10 is less than or equal to 600µm . As an example, such cacao granulate (31) may have a D10 of about 350µm, a D90 of about 700µm and a span of about 0.7. D10 is about 0.5*D90 and D90-D10 is about 350µm.

Cacao granulates (40, 41) according to the invention may be used in aeropress or fine cold brew brewing processes. Such a cacao granulate (40) may have a D10 of equal or more than 400µm and a D90 of equal or less than 1000µm. D10 is more than or equal to 0.4*D90. The span may be less than or equal to 0.86, whereas the D90-D10 is less than or equal to 600µm. As an example, such cacao granulate (41) may have a D10 of about 500µm, a D90 of about 900µm and a span of about 0.62. D10 is about 0.56*D90 and D90-D10 is about 400µm.

Cacao granulates (50, 51, 52, 53, 54, 55) according to the invention may be used in pour over or filter drip brewing processes. Such a cacao granulate (50) in general may have a D10 of equal or more than 350µm and a D90 of equal or less than 1350µm. D10 is more than or equal to 0.26*D90. The span may be less than or equal to 1.25, whereas the D90-D10 is less than or equal to 1000µm. Preferably, such cacao granulates (51) may have a D10 of equal or more than 400µm and a D90 of equal or less than 1100µm. D10 is more than or equal to 0.36*D90. The span may be less than or equal to 0.85, whereas the D90-D10 is less than or equal to 700µm. Optionally only a fine or coarse fraction may be used in these brewing processes to obtain a more specific extraction. As an example, a coarse fraction may be used in these brewing processes to obtain a more specific extraction, e.g. a cacao granulate (53) may have a D10 of about 850µm, a D90 of about 1100µm and a span of about 0.25. D10 is about 0.77*D90 and D90-D10 is about 250µm. As a further example, such cacao granulate (55) may have a D10 of about 700µm, a D90 of about 1250µm and a span of about 0.53. D10 is about 0.56*D90 and D90-D10 is about 550µm. For fine brew extraction, a cacao granulate (52) may have a D10 of about 425µm, a D90 of about 850µm and a span of about 0.65. D10 is about 0.5*D90 and D90-D10 is about 425µm. As a further example, such cacao granulate (54) may have a D10 of about 400µm, a D90 of about 900µm and a span of about 0.83. D10 is about 0.44*D90 and D90-D10 is about 500µm

Cacao granulates (60, 61) according to the invention which may be used in French press or coarse cold brew brewing processes. Such a cacao granulate (60) may have a D10 of equal or more than 600µm and a D90 of equal or less than 1500µm. D10 is more than or equal to 0.4*D90. The span may be less than or equal to 0.9, whereas the D90-D10 is less than or equal to 900µm. As an example, such cacao granulate (61) may have a D10 of about 900µm, a D90 of about 1300µm and a span of about 0.4. D10 is about 0.69*D90 and D90-D10 is about 400µm..

However, these ranges like spans, D10 and D90 are not necessarily limited for a specific brewing method. For one and the same brewing method, the person brewing the cacao brew may opt for another D10, D50, D90, span and alike. Based on the cacao bean profile (this is the origin, the type and composition of the ground on which the cacao plant has grown, way of fermenting, roasting, etc. ), which degree of grinding, water temperature, extraction time, ratio and alike is applied, and this in order to influence the taste characteristics that are 'extracted'. Lighter roasts, for example, basically require a higher water temperature and/or longer extraction time to achieve the desired output. As an example, extraction of darker roasts is easier. Hence potentially and as an example, in function of cocoa bean profile and type of grinding and alike, the parameters of the cacao grinding may be defined. Also, parameters such as water temperature, brew ratio, extraction time may be set in function of the cocoa bean profile and type of grinding and alike, and the desired taste of the brew aimed for.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method to produce a cacao granulate, comprising the steps of
- providing roasted cacao beans;
- optionally removing the husk from the roasted cacao beans thereby providing cacao nibs;
- comminuting the roasted cacao beans or the cacao nibs providing an intermediate comminute and providing a cacao granulate having a granule size distribution with a 90% fraction diameter (D90) smaller or equal to 2000µm.

2. A method to produce a cacao granulate according to claim 1 wherein the granule size distribution has a 10% fraction diameter (D10) more or equal to 0.1 times D90.

3. A method to produce a cacao granulate according to any one of the claims 1 to 2, wherein D90-D10 is less than or equal to 1750µm.

4. A method to produce a cacao granulate according to any one of the claims 1 to 3, wherein the granule size distribution has a 50% fraction diameter (D50), the span S ((D90-D10)/D50) is less than or equal to 2.5

5. A method to produce a cacao granulate according to any one of the claims 1 to 4, wherein said providing a cacao granulate comprises separating said intermediate comminute in at least two fractions, at least one of said two fractions being said cacao granulate having granule size distribution with a 90% fraction diameter (D90) smaller or equal to 2000µm.

6. A method to produce a cacao granulate according to claim 5, wherein the comminute is separated in at least N fractions, N being larger than 1, wherein at least one, some or all of the N fractions provides a cacao granulate having a granule size distribution with a 90% fraction diameter (D90) smaller or equal to 2000µm.

7. A method according to claim 6, wherein said at least one, some or all of the N fractions providing a cacao granulate having a granule size distribution with a 90% fraction diameter (D90) smaller or equal to 2000µm, have a 10% fraction diameter (D10) more or equal to 0.1 times D90 of this cacao granulate.

8. A method to produce a cacao granulate according to any one of the claims 6 to 7, wherein said at least one, some or all of the N fractions providing a cacao granulate having a granule size distribution with a 90% fraction diameter (D90) smaller or equal to 2000µm, have a D90-D10 being less than or equal to 1750µm.

9. A method according to according to any one of the claims 5 to 8 , wherein the intermediate comminute is separated in fractions by sieving, flushing, winnowing, sifting and/or extracting of the small particles by using electrostatic attraction.

10. A method according to any one of the preceding claims, wherein the husks are removed from the roasted cacao beans prior to comminuting.

11. A method according to any one of the preceding claims, wherein the roasted cacao beans or cacao nibs are comminuted in frozen state.

12. A method according to any one of the preceding claims, wherein the roasted cacao beans or cacao nibs are comminuted by grinding.

13. A cacao granulate comprising at least 24%w of cacao butter, said granulate having a granule size distribution with a 90% fraction diameter (D90) smaller or equal to 2000µm.

14. A cacao granulate according to claim 13, wherein
- said granulate having a D90 of less than or equal to 300; or
- said granulate having a D90 of less than or equal to 500; or
- said granulate having a D90 of less than or equal to 800; or
- said granulate having a D90 of less than or equal to 1000; or
- said granulate having a D90 of less than or equal to 1350; or
- said granulate having a D90 of less than or equal to 1500.

15. The use of a cacao granulate according to any one of the claims 13 to 14, for brewing or extracting a cacao bean based brew or extract using hot water or steam or cold water extraction.
